# EUROPEAN PATENT APPLICATION

(11) **EP 4 134 798 A1**
(43) Date of publication of application: **15.02.2023**
(21) Application number: 22153976.0
(22) Date of filing: 28.01.2022
(51) Int. Cl.: G06F 3/0481, G06F 3/04817, G06F 3/0486

(54) **SMALL WINDOW EXIT METHOD, ELECTRONIC DEVICE AND STORAGE MEDIUM**

(30) Priority: 09.08.2021 CN 202110908324
(71) Applicant: Beijing Xiaomi Mobile Software Co., Ltd., Beijing 100085 (CN)
(72) Inventor: YE, Qianqian, Beijing, 100085 (CN); YANG, Huiying, Beijing, 100085 (CN)
(74) Representative: dompatent von Kreisler Selting Werner - Partnerschaft von Patent- und Rechtsanwälten mbB

(57) **Abstract**

The present disclosure relates to a small window exit method and apparatus, an electronic device and a storage medium. The method is applied to a terminal and includes: showing(102) an exit region corresponding to a small window under the condition that the small window is displayed in a screen of the terminal; and executing(104) an exit operation of the small window when a preset operation specific to the exit region is detected.

## Description

### TECHNICAL FIELD

The present disclosure relates to the technical field of terminals, in particular to a small window exit method and apparatus, an electronic device and a storage medium.

### BACKGROUND

Windows often need to be generated in a terminal device such as a smart phone and a tablet computer so as to show related information of a terminal or a user. These windows are also called small windows because of their usually small size.

### SUMMARY

The present disclosure provides a small window exit method and apparatus, an electronic device and a storage medium. Small windows can still exit fast and conveniently when a size of a terminal is larger.

According to a first aspect of the present invention, a small window exit method is provided and applied to a terminal and includes:

showing an exit region corresponding to a small window under the condition that the small window is displayed in a screen of the terminal; and

executing an exit operation of the small window when a preset operation specific to the exit region is detected.

Optionally, the executing the exit operation of the small window when the preset operation specific to the exit region is detected, includes:

confirming that the preset operation specific to the exit region is detected when the small window is dragged to the exit region so as to execute the exit operation of the small window.

Optionally, a first prompt hotspot is arranged within a first preset distance around the exit region, and the method further includes:

scaling down the small window and/or making the small window semi-transparent when it is detected that the small window is dragged and suspended in the first prompt hotspot.

Optionally, a second prompt hotspot is arranged within a second preset distance around the first prompt hotspot, and the method further includes:

scaling up the exit region and/or changing a color of the exit region when it is detected that the small window is dragged and suspended in the second prompt hotspot.

Optionally, the executing the exit operation of the small window, includes:

performing center scaling on the small window and/or reducing transparency of the small window till to be zero so as to serve as an exit motional picture of the small window after the small window is dragged to the exit region.

Optionally, the showing the exit region corresponding to the small window under the condition that the small window is displayed in the screen of the terminal, includes:

showing the exit region corresponding to the small window under the condition that the small window is displayed in the screen of the terminal and is moved.

Optionally, small windows shown in the screen are in one-to-one correspondence with exit regions, and the executing the exit operation of the small window when the preset operation specific to the exit region is detected, includes:

executing the exit operation of any small window when a trigger operation specific to the exit region corresponding to the any small window is detected.

Optionally, the any small window is located on an upper layer above its corresponding exit region and blocks its corresponding exit region, a scaling-down hotspot is arranged within a third preset distance around the any small window, and the method further includes:

scaling down the any small window when it is detected that a user triggers the scaling-down hotspot so as to expose at least part of the exit region blocked by the any small window.

Optionally, the any small window is located on an upper layer above its corresponding exit region and blocks its corresponding exit region, a scaling-up hotspot is arranged within a fourth preset distance around the any small window, and the method further includes:

scaling up the exit region corresponding to the any small window when it is detected that a user triggers the scaling-up hotspot so as to expose at least part of the exit region blocked by the any small window.

Optionally, the showing the exit region corresponding to the small window under the condition that the small window is displayed in the screen of the terminal, includes: showing the exit region corresponding to the small window after detecting a long-press instruction of long pressing the small window; the small window is located in the exit region and located on an upper layer above the exit region; and

the executing the exit operation of the small window when the preset operation specific to the exit region is detected, includes: executing the exit operation of the small window after detecting an operation instruction of dragging the small window out of the exit region.

According to a second aspect of the present invention, an electronic device is provided and includes:
a processor; and
a memory, configured to store an instruction executable by the processor and,
the processor realizes the small window exit method by running the executable instruction, and the method includes:
showing an exit region corresponding to a small window under the condition that the small window is displayed in a screen of the terminal; and
executing an exit operation of the small window when a preset operation specific to the exit region is detected.

Optionally, the executing the exit operation of the small window when the preset operation specific to the exit region is detected, includes:
confirming that the preset operation specific to the exit region is detected when the small window is dragged to the exit region so as to execute the exit operation of the small window.

Optionally, a first prompt hotspot is arranged within a first preset distance around the exit region, and the method further includes:
scaling down the small window and/or making the small window semi-transparent when it is detected that the small window is dragged and suspended in the first prompt hotspot.

Optionally, a second prompt hotspot is arranged within a second preset distance around the first prompt hotspot, and the method further includes:
scaling up the exit region and/or changing a color of the exit region when it is detected that the small window is dragged and suspended in the second prompt hotspot.

Optionally, the executing the exit operation of the small window, includes:
performing center scaling on the small window and/or reducing transparency of the small window till to be zero so as to serve as an exit motional picture of the small window after the small window is dragged to the exit region.

Optionally, the showing the exit region corresponding to the small window under the condition that the small window is displayed in the screen of the terminal, includes:
showing the exit region corresponding to the small window under the condition that the small window is displayed in the screen of the terminal and is moved.

Optionally, small windows shown in the screen are in one-to-one correspondence with exit regions, and the executing the exit operation of the small window when the preset operation specific to the exit region is detected, includes:
executing the exit operation of any small window when a trigger operation specific to the exit region corresponding to the any small window is detected.

Optionally, the any small window is located on an upper layer above its corresponding exit region and blocks its corresponding exit region, a scaling-down hotspot is arranged within a third preset distance around the any small window, and the method further includes:
scaling down the any small window when it is detected that a user triggers the scaling-down hotspot so as to expose at least part of the exit region blocked by the any small window.

Optionally, the any small window is located on an upper layer above its corresponding exit region and blocks its corresponding exit region, a scaling-up hotspot is arranged within a fourth preset distance around the any small window, and the method further includes:
scaling up the exit region corresponding to the any small window when it is detected that a user triggers the scaling-up hotspot so as to expose at least part of the exit region blocked by the any small window.

Optionally, the showing the exit region corresponding to the small window under the condition that the small window is displayed in the screen of the terminal, includes: showing the exit region corresponding to the small window after detecting a long-press instruction of long pressing the small window; the small window is located in the exit region and located on an upper layer above the exit region; and
the executing the exit operation of the small window when the preset operation specific to the exit region is detected, includes: executing the exit operation of the small window after detecting an operation instruction of dragging the small window out of the exit region.

According to a third aspect of the present invention, storing computer instructions thereon, and when the instruction is executed by a processor, teps of the method according to the first aspect are realized.

Technical solutions provided by the examples of the present disclosure may include the following beneficial effects: the exit region corresponding to the small window will be shown when the small window is displayed in the screen of the terminal. Based on this, the user needs to execute the preset operation specific to the exit region so as to make the corresponding small window exit, so that the problem that in the related art, the small window needs to be dragged out of the screen at a certain speed so as to exit, and consequently, it is quite inconvenient to make the small window exit in a terminal with a larger screen size is avoided.

Besides, in the present disclosure, the small window is located on an upper layer above the exit region while the small window and the exit region corresponding thereto are shown at the same time, so that the problem that a small window displaying effect is affected due to the exit region blocking the small window is avoided.

It should be understood that the above general description and the following detailed description are only exemplary and explanatory rather than intend to limit the present disclosure.

### BRIEF DESCRIPTION OF THE DRAWINGS

Accompanying drawings here, which are incorporated in and constitute a part of this specification, illustrate embodiments consistent with the present disclosure and, together with the specification, serve to explain principles of the present disclosure.
Fig. 1 is a flowchart of a small window exit method illustrated according to an example.
Fig. 2 is a flowchart of a mini window exit method illustrated according to an example.
Fig. 3A is a first schematic diagram of a mini window shown on a tablet computer illustrated according to an example.
Fig. 3B is a second schematic diagram of a mini window shown on a tablet computer illustrated according to an example.
Fig. 3C is a third schematic diagram of a mini window shown on a tablet computer illustrated according to an example.
Fig. 4 is a flowchart of another mini window exit method illustrated according to an example.
Fig. 5A is a fourth schematic diagram of a mini window shown on a tablet computer illustrated according to an example.
Fig. 5B is a fifth schematic diagram of a mini window shown on a tablet computer illustrated according to an example.
Fig. 6 is a flowchart of yet another mini window exit method illustrated according to an example.
Fig. 7A is a sixth schematic diagram of a mini window shown on a tablet computer illustrated according to an example.
Fig. 7B is a seventh schematic diagram of a mini window shown on a tablet computer illustrated according to an example.
Fig. 8 is a block diagram of a small window exit apparatus illustrated according to an example.
Fig. 9 is a schematic structural diagram of an electronic device according to an example.

### DETAILED DESCRIPTION

Examples will be described in detail, whose instances are represented in the drawings. Unless otherwise stated, when the following description concerns the drawings, the same reference numbers in the different drawings represent the same or similar elements. Implementations described in the following examples do not represent all implementations consistent with the present disclosure. Rather, they are examples of an apparatus and a method detailed in the appended claims and consistent with some aspects of the present disclosure.

Terms used in the present disclosure are intended to describe specific embodiments rather than limit the present disclosure. A singular form of "a/an" and "the" used in the present disclosure and the appended claims intends to cover a plural form unless other meanings are stated clearly in the context. It should be further understood that a term "and/or" used herein refers to and contains any one or all possible combinations of one or a plurality of related listed items.

It should be understood that various information may be described by using terms such as "first", "second" and "third" in the present disclosure but is not supposed to be limited by these terms. These terms are used for distinguishing the same type of information. For example, without departing from the scope of the present disclosure, first information may be also called second information, and likewise, the second information may be also called first information. Depending on the context, a word "if' used herein may be constructed as "when the small window exits" or "in response to determining".

Windows often need to be generated in a terminal device such as a smart phone and a tablet computer so as to show related information of a terminal or a user. These windows are also called small windows because of their usually small size.

In the related art, if the user needs to make the small windows exit, the user needs to press the small windows and then drag the corresponding small windows out of a screen at a certain speed, and the process is also called "dragging the small window out of the screen". This method can conveniently and fast make the small windows exit when applied to a terminal device with a smaller screen size such as the smart phone. However, when this method is applied to a terminal device with a larger screen size, for example, when this method is applied to the tablet computer, it is difficult to make a speed of dragging the small windows by the user reach a predetermined speed threshold value due to increase of a moving distance, resulting in quite inconvenient operation of making the small windows exit.

The present disclosure provides a small window exit method so as to avoid the problem that in the related art, the small windows need to exit in a mode of dragging the small windows out of the screen, resulting in inconvenient operation of making the small windows exit in a terminal with a larger screen size.

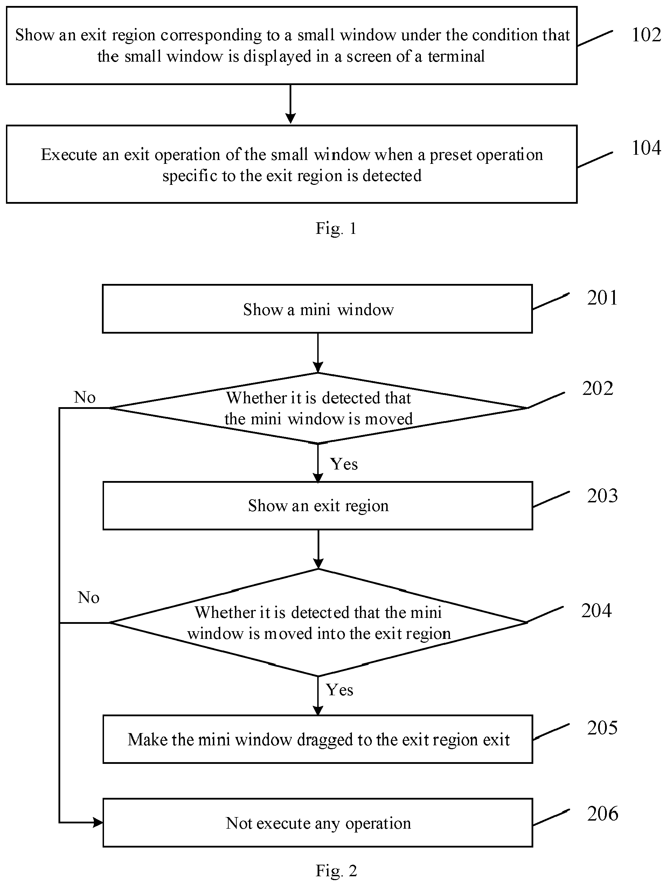

Fig. 1 is a flowchart of a small window exit method illustrated according to an example. The method is applied to a terminal. As shown in Fig. 1, the method may include the following steps.

Step 102, an exit region corresponding to a small window is shown under the condition that the small window is displayed in a screen of the terminal.

It can be known from the above contents that in the related art, the reason that there is a problem of a quite inconvenient operation of making the small window exit in the terminal containing a large-size screen lies in that a dragging distance of the small window is increased while the user drags the window out of the screen with increase of the screen size, consequently, it is difficult to make a dragging speed of the user reach a speed threshold value of dragging out of the screen, then an exit failure is prone to occurring when the small window exits in this method, and consequently, the operation of making the small window exit is quite inconvenient.

In view of this, the present disclosure designs a new small window exit method so as to make the small window exit still fast and conveniently in the terminal containing the large-size screen. For example, a screen of the terminal with its screen area being larger than a preset value can be determined as a large-size screen, and the preset value can be set according to specific demands, which is not specifically limited by the present example. For example, the exit region corresponding to the small window can be shown under the condition that the small window is displayed in the screen of the terminal. Based on this, the terminal can judge whether the user needs to make the small window exit by needing to detect whether the user executes a preset operation specific to the exit region. When it is detected that the user executes the preset operation specific to the exit region, it can be determined that the user needs to make the small window exit, and then the exit operation of the small window is executed.

It should be understood that the small window can exit by needing to execute the preset operation specific to the exit region corresponding to the small window. Apparently, the small window can also exit fast and conveniently though the small window exit method is applied to the terminal containing the large-size screen, so that the problem that in the related art, the small window exits in a mode of dragging it out of the screen, and consequently, the exit operation of the small window is inconvenient is avoided.

In the present disclosure, the small window and the exit region may be further located on different canvases (also called layers or View), for example, the small window may be located on an upper layer above the exit region so as to avoid the situation that the exit region blocks the small window.

Step 104, an exit operation of the small window is executed when the preset operation specific to the exit region is detected.

In the present disclosure, different preset operations may be arranged according to actual demands, so that the small window exits via the exit region corresponding to the small window.

In an example, the preset operation may be a dragging operation of dragging the small window to the exit region. In other words, the terminal can confirm that the preset operation specific to the exit region is detected when the small window being dragged to the exit region is detected, and then the exit operation of the small window can be executed. During actual operation, whether the small window is dragged to the exit region can be judged by using a trigger position of the user as a reference, for example, when the user drags the small window, if the contact position with the screen already enters the exit region, it can be judged that the small window is already dragged into the exit region. Certainly, it may be also judged that the small window is dragged into the exit region when it is detected that all regions of the whole small window are dragged into the exit region. How to judge whether the small window is dragged into the exit region specifically may be determined by those skilled in the art according to actual conditions and will not be limited by the present disclosure.

In the present example, a prompt hotspot corresponding to the exit region may be further arranged so that the user can be prompted that the small window will exit if the small window is dragged to the exit region when the small window is dragged to the prompt hotspot. For example, a first prompt hotspot may be arranged within a first preset distance around the exit region (the first prompt hotspot does not contain the exit region), when the terminal detects that the user drags the small window into the first prompt hotspot and suspends in the first prompt hotspot, the small window can be scaled down or semi-transparent, and certainly, the small window can be semi-transparent while the small window is scaled down. It should be understood that "semi-transparent" and "scale down" both have a 'disappear' meaning in the mind of the user so that an effect of "prompt the user: the small window will exit if it is dragged into the exit region" can be achieved. Similar to judging whether the small window is dragged into the exit region, that is, whether the small window is dragged into the first prompt hotspot can be judged by using the trigger position of the user on the screen as the reference; or whether the small window is dragged into the first prompt hotspot can be judged by using all the regions of the whole small window as the reference. It needs to be further stated that the above suspending in the first prompt hotspot refers to: a state that the small window keeps pressed and suspended in the first prompt hotspot after the user long presses the small window and drags the small window into the first prompt hotspot, that is, when stay time of the small window in the first prompt hotspot is longer than a set specific value, it indicates that the small window is suspended in the first prompt hotspot.

In the present example, a second prompt hotspot may be further arranged within a second preset distance around the first prompt hotspot (the second prompt hotspot does not contain the first prompt hotspot). Then, when the terminal detects that the user drags the small window into the second prompt hotspot and suspends in the second prompt hotspot, the exit region can be scaled up or a color of the exit region can be changed, certainly, the color of exit region can be changed while the exit region is scaled up, and how much the exit region is scaled up may be set according to specific demands and will not be specifically limited by the present example. This mode is equivalent to prompting the user in a perspective of changing the exit region: the small window will exit after it is dragged to the exit region. It needs to be stated that the first preset distance and the second preset distance may be determined by those skilled in the art according to actual demands and will not be limited by the present disclosure. Besides, a scaledup degree and a color changing mode may also be determined by those skilled in the art according to actual demands as long as a prompt effect is achieved.

In the present example, a certain example motional picture may also be arranged, so that a visual effect of exit of the small window is smooth. During actual operation, after the terminal detects that the user drags the small window to the exit region, the small window can be subjected to center scaling so that the small window can be continuously scaled down till disappear, and exit of the small window is realized, or transparency of the small window can be continuously reduced till to be zero, so that exit of the small window is realized. Certainly, the transparency of the small window can also be reduced till to be zero while the small window is subjected to center scaling, so that exit of the small window is realized.

In the present example, the exit region corresponding to the small window can be shown in a mode of performing a certain operation on the small window. For example, before the small window is generated and moved, the exit region corresponding to it cannot be shown, and after the terminal detects that the small window is moved, the exit region corresponding to it can be shown. In other words, the exit region corresponding to the small window is shown under the condition that the small window is displayed in the screen of the terminal and is moved.

It should be understood that as the small window exits in a mode of dragging the small window to the exit region in the example, during actual application, a corresponding exit region may be arranged for each small window, or the same exit region may be arranged for a plurality of small windows. How to arrange the exit region for the small window specifically may be set by those skilled in the art according to actual conditions.

In another example, the small windows shown in the screen can be in one-to-one correspondence with the exit regions, that is, each small window shown in the screen corresponds to a unique exit region. So the terminal can execute the exit operation of any small window when a trigger operation specific to the exit region corresponding to the any small window is detected. For example, as for a tablet computer or a smart phone, when it is detected that the user clicks the exit region to which any small window corresponds with a finger or a stylus, the any small window can be closed. For another example, as for a personal computer (PC), when it is detected that the user controls a mouse to click the exit region to which any small window corresponds, the any small window can be closed.

In the present example, any small window can block the exit region to which it corresponds so that the problem that the exit region is directly shown in the screen and occupies a display space can be avoided. Based on this, the exit region is blocked by the small window and the user cannot directly make contact with the exit region, so the present disclosure may further arrange a corresponding hotspot around the small window so that the user exposes at least part of the exit region blocked by the any small window when triggering the hotspot, and the user can trigger the exit region to make the small window exit.

For example, a scaling-down hotspot can be arranged within a third preset distance around any small window, the any small window is scaled down when it is detected that the user triggers the scaling-down hotspot, the at least part of the exit region blocked by the any small window is exposed, and the user can trigger the exposed exit region to make the any small window exit. For example, when the terminal is the smart phone, the user can trigger the scaling-down hotspot in a mode of clicking the scaling-down hotspot with the finger or the stylus, correspondingly, the user can also trigger the exit region in a mode of clicking the exit region with the finger or the stylus.

For another example, a scaling-up hotspot can be arranged within a fourth preset distance around the any small window, the exit region corresponding to the any small window can be scaled up when it is detected that the user trigger the scaling-up hotspot, at least part of the exit region is exposed, and the user can trigger the exposed exit region to make the any small window exit.

For another example, the terminal can show the exit region corresponding to the small window after receiving a long-press instruction of long pressing the small window, however, the exit region is shown on a lower layer below the corresponding small window, and the small window is located in the exit region. In this case, the terminal can confirm that the preset operation specific to the exit region is detected when detecting an operation instruction of dragging the small window out of the exit region and then execute the exit operation of the small window.

It needs to be stated that the above small window may be a mini window used for showing information, and the user cannot perform other operations on the mini window except a moving operation. The terminal may be any type of terminal devices, for example, may be the smart phone, the tablet computer and other mobile terminals, or may be the PC, a smart television and other fixed terminals. Which of them is the terminal device specifically may be determined by those skilled in the art according to actual conditions and will not be limited by the present disclosure. It needs to be further stressed that the above hotspot may be simply constructed as a region or a range in the present disclosure and has no other special meanings.

It can be known from the above technical solution that in the technical solution of the present disclosure, the exit region corresponding to the small window will be shown when the small window is displayed in the screen of the terminal. Based on this, the user needs to execute the preset operation specific to the exit region so as to make the corresponding small window exit, so that the problem that in the related art, the small window needs to be dragged out of the screen at a certain speed so as to exit, which leads to quite inconvenient exit operation of the small window in the terminal with the larger screen size is avoided. Besides, in the present disclosure, when the small window and the exit region corresponding to it are shown at the same time, the small window is located on the upper layer above the exit region, so that the problem that the exit region blocks the small window and consequently, the display effect of the small window is affected is avoided.

In an operation mode of the present disclosure, in the present disclosure, the operation of dragging the small window to the exit region may serve as the above preset operation so that the user needs to drag the small window to the exit region so as to realize exit of the small window. In the mode, the united exit region can be arranged for the plurality of small windows so that the situation that the plurality of exit regions need to be arranged when the plurality of small windows are shown in the screen can be avoided.

In another operation mode of the present disclosure, each small window can correspond to the unique exit region in the present disclosure, so the user needs to trigger the exit region corresponding to any small window when needing to make the any small window exit. During actual operation, the small window can block the exit region to which it corresponds, the hotspots can be arranged within the preset distances around the small window so that the user can expose the exit region of each small window by triggering the corresponding hotspot when the small window needs to exit. As in the mode, the exit region is blocked by the corresponding small window, the problem that the display space of the screen is occupied by the exit region is avoided.

The technical solution of the present disclosure is introduced below by taking a mini window in the tablet computer for example.

Fig. 2 is a flowchart of a mini window exit method illustrated according to an example. As shown in Fig. 2, the method may include the following steps.

Step 201, the mini window is shown.

In the present example, the mini window refers to: a window used for showing terminal information or user information, and any other operation cannot be executed except movement.

In the present example, the user can operate an installing program in the tablet computer so as to open the corresponding mini window and show it in the screen of the tablet computer.

Step 202, whether it is detected that the mini window is moved is judged, if yes, it skips to step 203, and otherwise, it skips to step 206.

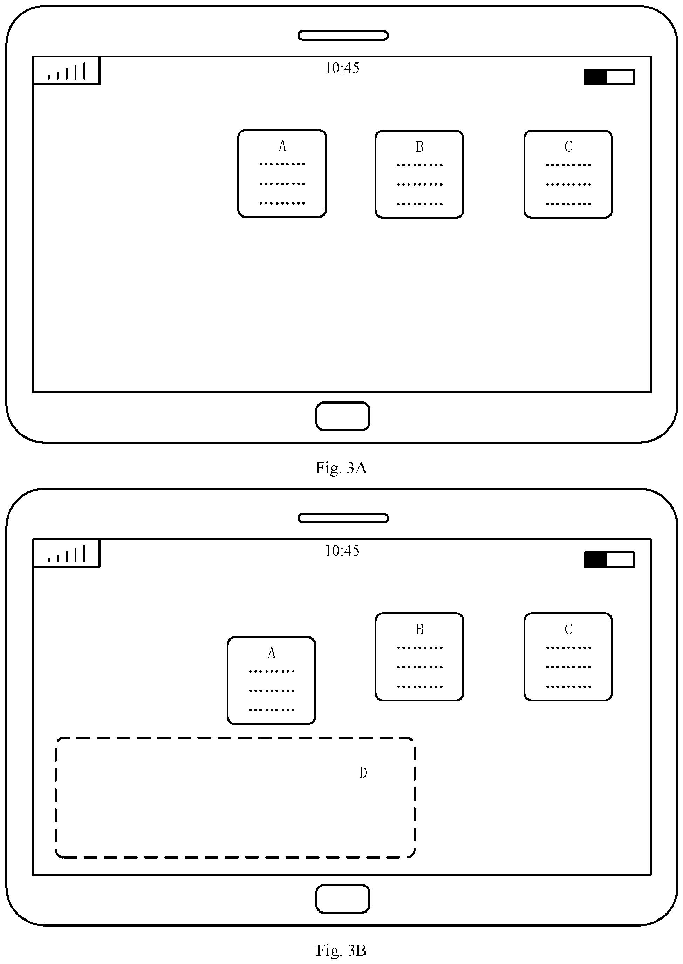

For example, hypothetically, under an operation of the user, three mini windows A, B and C in Fig. 3A can be shown in the screen of the tablet computer. Based on this, if it is detected that the user is moving the mini window A, the exit region D shown in Fig. 3B can be shown.

Step 203, the exit region is shown.

Step 204, whether it is detected that the mini window is moved into the exit region is judged, if yes, it skips to step 205, and otherwise, it skips to step 206.

Continuing the above example, if it is detected that the mini window A is dragged into the exit region D, the exit operation specific to the mini window A can be executed, for example, after the user presses the mini window A, drags it into the exit region D and loosens the hand, a center scaling motional picture of the mini window A can be shown, a size of the mini window A is continuously reduced till disappear, and exit of the mini window A is completed.

Step 205, the mini window dragged to the exit region exits.

In the present example, the prompt hotspot may be further arranged within the preset distance around the exit region.

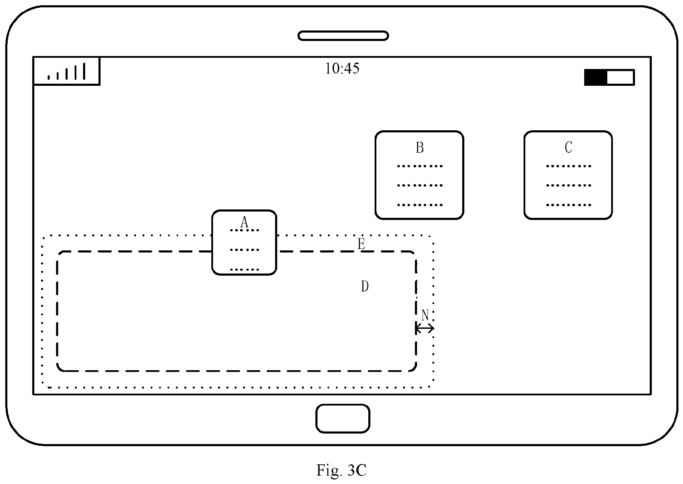

Continuing the above example, as shown in Fig. 3C, the prompt hotspot E is arranged in N pixels around the exit region D, so when the user drags the mini window A into the prompt hotspot E (during actual operation, whether the mini window is dragged into the prompt hotspot E can be judged by using a pressing position of the user as a reference), the mini window A can be scaled down, so that the user is promoted that the mini window A will exit if it is dragged into the exit region D.

Step 206, any operation is not executed.

It can be known from the technical solution that the present example can make the mini window exit in a mode of dragging the mini window to the exit region, so that the problem that in the related art, the mini window exits by being dragged out of the screen at the certain speed, which leads to quite inconvenient exit operation of the mini window in the terminal with the larger screen size is avoided.

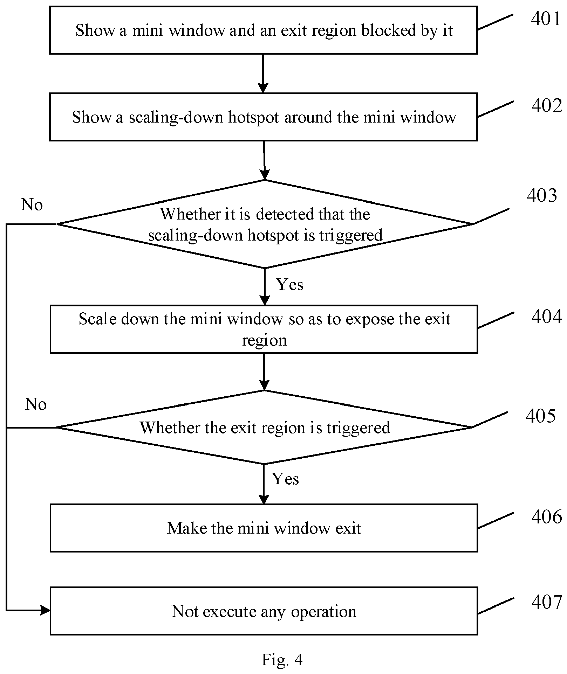

Fig. 4 is a flowchart of another mini window exit method illustrated according to an example. As shown in Fig. 4, the method may include the following steps.

Step 401, the mini window and the exit region blocked by it are shown.

In the present example, the exit region to which any mini window corresponds is blocked by the mini window, in other words, when any small window and its exit region are shown, the user sees the any small window in the screen but cannot see its corresponding exit region.

Step 402, the scaling-down hotspot around the mini window is shown.

In the present examples, after the mini window is shown, the scaling-down hotspot may be further shown within the preset distance around the mini window.

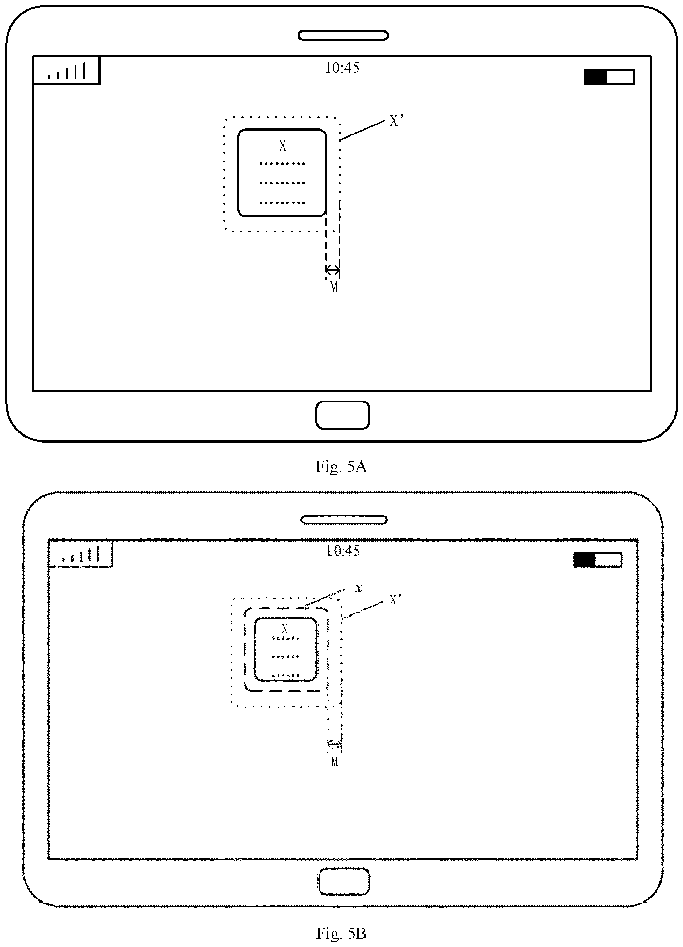

For example, the mini window X shown in Fig. 5A can be shown in the tablet computer, a size of the exit region x (not shown in Fig. 5A) to which it corresponds is consistent with that of the mini window X, the exit region X is just blocked by the mini window X, and the scaling-down hotspot X' to which the mini window corresponds may be further arranged within the preset distance M around the mini window X.

Step 403, whether it is detected that the scaling-down hotspot is triggered is judged, if yes, it skips to step 404, and otherwise, it skips to step 407.

Continuing the above example, when it is detected that the scaling-down hotspot X' is triggered by the user, it can confirm that the user needs to make the corresponding mini window X exit, so the mini window X can be scaled down as shown in Fig. 5B so as to expose the exit region x.

Step 404, the mini window is scaled down so as to expose the exit region.

Step 405, whether the exit region is triggered is judged, if yes, it skips to step 406, and otherwise, it skips to step 407.

Continuing the above example, whether the user triggers the exit region x can be judged, and if the user triggers the exit region x, the exit operation of the mini window X can be executed.

Step 406, the mini window exits.

It needs to be stated that the present example makes instruction by taking the mini window being scaled down so as to expose the exit region for example, certainly, the exit region may be exposed in a mode of scaling up the blocked exit region described above, and how to operate specifically may be determined by those skilled in the art according to actual conditions and will not be limited by the present example.

Step 407, any operation is not executed.

It can be known from the technical solution that each mini window in the present example may correspond to the unique exit region which is blocked by the corresponding mini window. The corresponding scaling-down hotspot is arranged within the preset distance around each mini window so that the user can scale down the mini window in a mode of triggering the scaling-down hotspot so as to expose the corresponding exit region. Based on this, the user needs to trigger the exposed exit region so as to indicate the tablet computer to make the mini window exit.

In the mode, the problem that in the related art, the mini window needs to be dragged out of the screen at the certain speed so as to exit, which leads to quite inconvenient exit operation of the mini window in the terminal with the larger screen size can be avoided. Besides, the exit region to which each mini window corresponds is blocked by the corresponding mini window so that the problem that the exit region is displayed and occupies extra display space of the screen can be avoided.

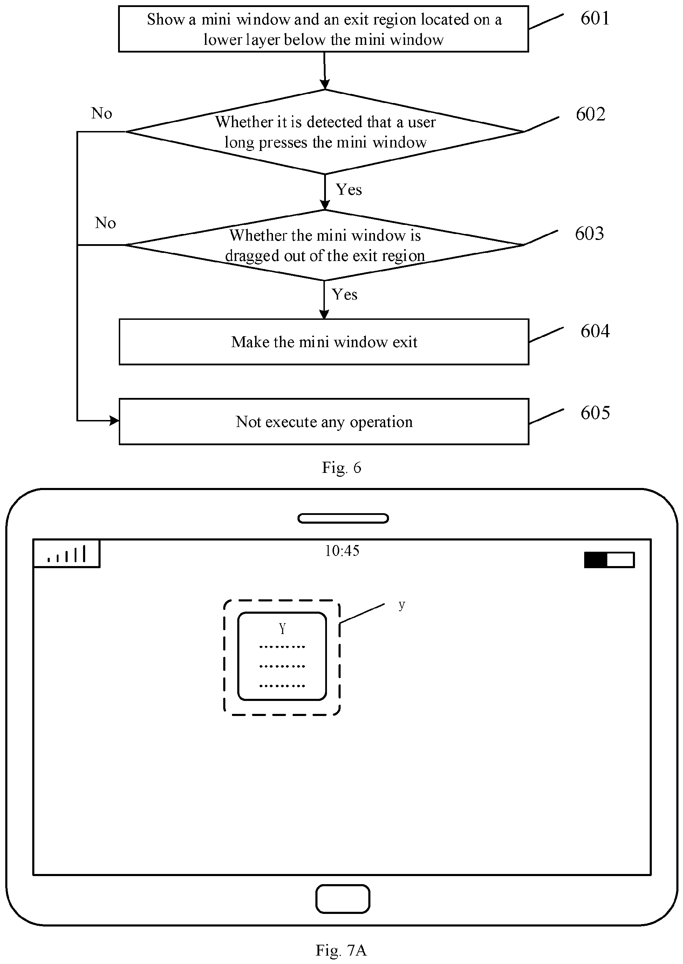

Fig. 6 is a flowchart of yet another mini window exit method illustrated according to an example. As shown in Fig. 6, the method may include the following steps:

Step 601, the mini window and the exit region located on the lower layer below the mini window are shown.

In the present example, the exit region to which any mini window corresponds is located on the lower layer below the any mini window, and the mini window is located in the exit region.

For example, the mini window Y shown in Fig. 7A can be shown in the tablet computer, a size of the exit region y to which the mini window Y corresponds may be slightly larger than that of the mini window Y, and the exit region y is located on the lower layer below the mini window Y

Step 602, whether it is detected that the user long presses the mini window is judged, if yes, it skips to step 603, and otherwise, it skips to step 605.

Step 603, whether the mini window is dragged out of the exit region is judged, if yes, it skips to step 604, and otherwise, it skips to step 605.

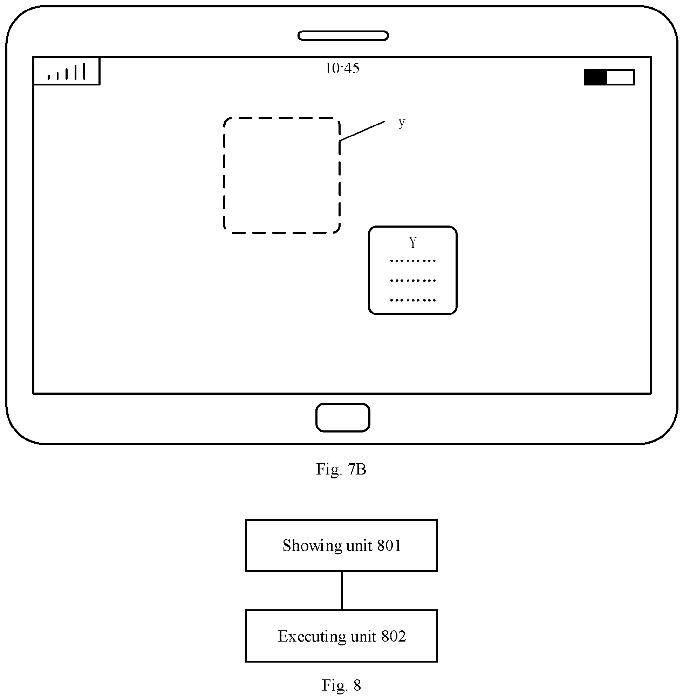

Continuing the above example, when it is detected that the mini window Y is long pressed, the terminal can confirm that the user may need to make the mini window Y exit, and whether the mini window Y is dragged out of the exit region y is further judged. If, as shown in Fig. 7B, the mini window Y is dragged out of the range of the exit region y, the exit operation of the mini window Y can be executed.

Step 604, the mini window exits.

Step 605, any operation is not executed.

It can be known from the above technical solution that the mini window in the present example is located in its corresponding exit region originally, and whether the exit operation of the mini window needs to be executed is determined in a mode of judging whether the mini window is dragged out of its corresponding exit region. The exit operation of the mini window is executed when it is confirmed that the mini window is dragged out of its corresponding exit region. In the mode, the problem that in the related art, the mini window needs to be dragged out of the screen at the certain speed so as to exit, which leads to quite inconvenient exit operation of the mini window in the terminal with the larger screen size can be avoided.

Fig. 8 is a block diagram of a small window exit apparatus illustrated according to an example. Referring to Fig. 8, the apparatus includes a showing unit 801 and an executing unit 802.

The showing unit 801 shows an exit region corresponding to a small window under the condition that the small window is displayed in a screen of a terminal.

The executing unit 802 executes an exit operation of the small window when a preset operation specific to the exit region is detected.

In some embodiments, the executing unit 802 is further configured to:
confirm that the preset operation specific to the exit region is detected when the small window is dragged to the exit region so as to execute the exit operation of the small window.

In some embodiments, the executing unit 802 is further configured to:
scale down the small window and/or make the small window semi-transparent when it is detected that the small window is dragged and suspended in a first prompt hotspot.

In some embodiments, the executing unit 802 is further configured to:
scale up the exit region and/or change a color of the exit region when it is detected that the small window is dragged and suspended in a second prompt hotspot.

In some embodiments, the executing unit 802 is further configured to:
perform center scaling on the small window and/or reduce transparency of the small window till to be 0 so as to serve as an exit motional picture of the small window after the small window is dragged to the exit region.

In some embodiments, the showing unit 801 is further configured to:
show the exit region corresponding to the small window under the condition that the small window is displayed in the screen of the terminal and is moved.

In some embodiments, small windows shown in the screen are in one-to-one correspondence with exit regions. The executing unit 802 is further configured to:
execute the exit operation of any small window when a trigger operation specific to an exit region corresponding to the any small window is detected.

In some embodiments, the any small window blocks its corresponding exit region. A scaling-down hotspot is arranged within a third preset distance around the any small window. The executing unit 802 is further configured to:
scale down the any small window when it is detected that the user triggers the scaling-down hotspot so as to expose at least part of the exit region blocked by the any small window.

In some embodiments, the any small window blocks its corresponding exit region. A scaling-up hotspot is arranged within a fourth preset distance around the any small window. The executing unit 802 is further configured to:
scale up the exit region corresponding to the any small window when it is detected that the user triggers the scaling-up hotspot so as to expose at least part of the exit region blocked by the any small window.

In some embodiments, the showing unit 802 is further configured to: show the exit region corresponding to the small window after detecting a long-press instruction of long pressing the small window, in which the small window is located in the exit region.

The executing unit 802 is further configured to: execute the exit operation of the small window after detecting an operation instruction of dragging the small window out of the exit region.

As for the apparatus example, it basically corresponds to a method example, so the related portions may refer to part of description of the method example. The above described apparatus example is exemplary, units described as separated components may be separated physically or not, components displayed as units may be physical units or not, that is, may be located in one place, or may be distributed to a plurality of network units. Objectives of the solution of the present disclosure may be realized by selecting part of or all of the modules herein according to actual demands. Those of ordinarily skilled in the art can understand and implement it without creative work.

Correspondingly, the present disclosure further provides a small window exit apparatus, including: a processor; and a memory, configured to store an instruction executable by the processor. The processor is configured to realize any small window exit method according to the above examples. For example, the method may include: an exit region corresponding to the small window is shown under the condition that the small window is displayed in a screen of the small window, and the small window is located on an upper layer above the exit region; and an exit operation of the small window is executed when a preset operation specific to the exit region is detected.

Correspondingly, the present disclosure further provides an electronic device, including a memory and one or more programs. The one or more programs is/are stored in the memory. It is configured to make one or more processors execute an instruction used for realizing any small window exit method according to the above examples and contained in the one or more programs. For example, the method may include: an exit region corresponding to a small window is shown under the condition that the small window is displayed in a screen of a terminal, and the small window is located on an upper layer above the exit region; and an exit operation of the small window is executed when a preset operation specific to the exit region is detected.

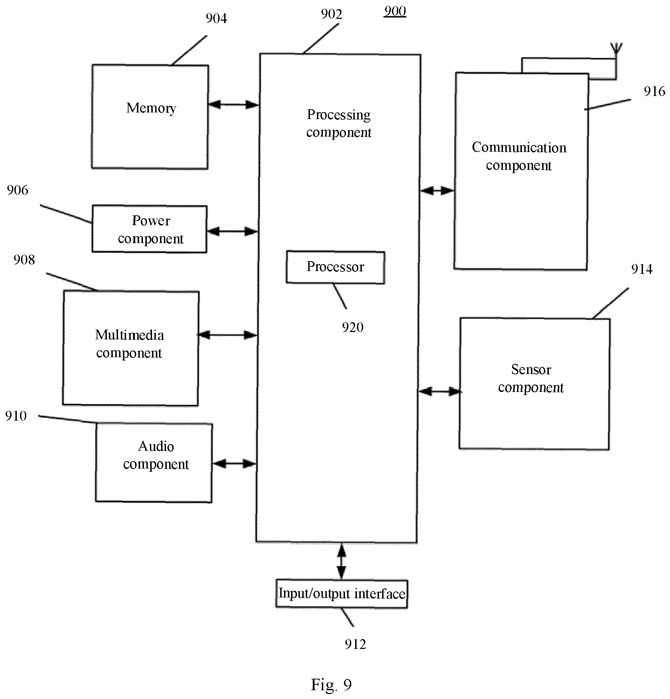

Fig. 9 is a block diagram of an apparatus 900 for realizing a process scheduling method illustrated according to an example. For example, the apparatus 900 may be a mobile phone, a computer, a digital broadcast terminal, a messaging device, a game console, a tablet device, a medical device, a fitness facility, a personal digital assistant, etc.

Referring to Fig. 9, the apparatus 900 may include one or more components as follows: a processing component 902, a memory 904, a power component 906, a multimedia component 908, an audio component 910, an input/output (I/O) interface 912, a sensor component 914 and a communication component 916.

The processing component 902 generally controls whole operation of the apparatus 900, such as operations related to display, phone call, data communication, camera operation and recording operation. The processing component 902 may include one or more processors 920 for executing the instructions so as to complete all or part of steps of the above method. Besides, the processing component 902 may include one or more modules to facilitate interaction between the processing component 902 and the other components. For example, the processing component 902 may include a multimedia module so as to facilitate interaction between the multimedia component 908 and the processing component 902.

The memory 904 is configured to store various data so as to support operations on the apparatus 900. Instances of these data include instructions of any application program or method for operation on the apparatus 900, contact person data, telephone directory data, messages, pictures, videos and the like. The memory 904 may be realized by any type of volatile or nonvolatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or a compact disc.

The power component 906 provides power for the various components of the apparatus 900. The power component 906 may include a power management system, one or more power sources, and other components related to power generation, management and distribution for the apparatus 900.

The multimedia component 908 includes a screen which provides an output interface between the apparatus 900 and a user. In some examples, the screen may include a liquid crystal display (LCD) and a touch panel (TP). If the screen includes the touch panel, the screen may be realized as a touch screen so as to receive an input signal from the user. The touch panel includes one or more touch sensors so as to sense touching, swiping and gestures on the touch panel. The touch sensor can not only sense a boundary of a touching or swiping action, but also detect duration and pressure related to touching or swiping operation. In some examples, the multimedia component 908 includes a front camera and/or a rear camera. When the apparatus 900 is in an operation mode, such as a photographing mode or a video mode, the front camera and/or the rear camera can receive external multimedia data. Each front camera and each rear camera may be a fixed optical lens system or have a focal length and an optical zoom capability.

The audio component 910 is configured to output and/or input an audio signal. For example, the audio component 910 includes a microphone (MIC). When the apparatus 900 is in the operation mode, such as a call mode, a recording mode and a voice recognition mode, the microphone is configured to receive an external audio signal. The received audio signal may be further stored in the memory 904 or sent via the communication component 916. In some examples, the audio component 910 may further include a speaker for outputting the audio signal.

The I/O interface 912 provides an interface between the processing component 902 and a peripheral interface module, and the peripheral interface module may be a keyboard, a click wheel, buttons and the like. These buttons may include but are not limited to: a home button, a volume button, a start button and a lock button.

The sensor component 914 includes one or more sensors, configured to provide state evaluation of various aspects for the apparatus 900. For example, the sensor component 914 may detect a start/shut-down state of the apparatus 900 and relative positioning of the components. For example, the components are a display and a keypad of the apparatus 900. The sensor component 914 may further detect position change of the apparatus 900 or one component of the apparatus 900, whether there is contact between the user and the apparatus 900, and azimuth or speed up/speed down and temperature change of the apparatus 900. The sensor component 914 may include a proximity sensor, configured to detect existence of a nearby object without any physical contact. The sensor component 914 may further include an optical sensor, such as a CMOS or CCD image sensor, for use in imaging application. In some examples, the sensor component 914 may further include an acceleration sensor, a gyroscope sensor, a magnetic sensor, a pressure sensor or a temperature sensor.

The communication component 916 is configured to facilitate wired or wireless communication between the apparatus 900 and the other devices. The apparatus 900 may be accessed to a wireless network based on a communication standard, such as WiFi, 2G or 3G, 4G LTE, 5G NR (new radio) or their combination. In an example, the communication component 916 receives a broadcast signal or related broadcast information from an external broadcast management system via a broadcast channel. In an example, the communication component 916 may further include a near-field communication (NFC) module so as to facilitate short-range communication. For example, the NFC module may be realized based on a radio frequency identification (RFID) technology, an infra-red data association (IrDA) technology, an ultra wide band (UWB) technology, a Bluetooth (BT) technology and other technologies.

In an example, the apparatus 900 may be realized by one or more of an application specific integrated circuits (ASIC), a digital signal processors (DSP), a digital signal processing device (DSPD), a programmable logic device (PLD), a field-programmable gate array (FPGA), a controllers a microcontroller, a microprocessor or other electronic elements for executing the above method.

In an example, a non-transitory computer readable storage medium including instructions is further provided, such as the memory 904 including the instructions. The instructions may be executed by the processor 920 of the apparatus 900 so as to complete the above method. For example, the non-temporary computer readable storage medium may be an ROM, a random access memory (RAM), a CD-ROM, a magnetic tape, a floppy disk, an optical data storage device and the like.

It should be understood that the present disclosure is not limited to an accurate structure described above and shown in the drawings and accepts various modifications and changes without departing from its scope. The scope of the present disclosure is limited only by the appended claims.

The above description is only examples of the present disclosure without limiting the present disclosure. Any modification, equivalent replacement, improvements and the like made within the principle of the present disclosure should fall within the protection scope of the present disclosure.

## Claims

1. A small window exit method, applied to a terminal and comprising:
showing(102) an exit region corresponding to a small window under the condition that the small window is displayed in a screen of the terminal; and
executing(104) an exit operation of the small window when a preset operation specific to the exit region is detected.

2. The method according to claim 1, wherein the executing the exit operation of the small window when the preset operation specific to the exit region is detected, comprises:
confirming that the preset operation specific to the exit region is detected when the small window is dragged to the exit region so as to execute the exit operation of the small window.

3. The method according to claim 1 or 2, wherein a first prompt hotspot is arranged within a first preset distance around the exit region, and the method further comprises:
scaling down the small window and/or making the small window semi-transparent when it is detected that the small window is dragged and suspended in the first prompt hotspot.

4. The method according to claim 3, wherein a second prompt hotspot is arranged within a second preset distance around the first prompt hotspot, and the method further comprises:
scaling up the exit region and/or changing a color of the exit region when it is detected that the small window is dragged and suspended in the second prompt hotspot.

5. The method according to any one of claims 1 to 4, wherein the executing the exit operation of the small window, comprises:
performing center scaling on the small window and/or reducing transparency of the small window till to be zero so as to serve as an exit motional picture of the small window after the small window is dragged to the exit region.

6. The method according to any one of claim 1 to 4, wherein the showing the exit region corresponding to the small window under the condition that the small window is displayed in the screen of the terminal, comprises:
showing the exit region corresponding to the small window under the condition that the small window is displayed in the screen of the terminal and is moved.

7. The method according to any of claims 1 to 6, wherein small windows shown in the screen are in one-to-one correspondence with exit regions, and the executing the exit operation of the small window when the preset operation specific to the exit region is detected, comprises:
executing the exit operation of any small window when a trigger operation specific to the exit region corresponding to the any small window is detected.

8. The method according to claim 7, wherein the any small window is located on an upper layer above its corresponding exit region and blocks its corresponding exit region, a scaling-down hotspot is arranged within a third preset distance around the any small window, and the method further comprises:
scaling down the any small window when it is detected that a user triggers the scaling-down hotspot so as to expose at least part of the exit region blocked by the any small window.

9. The method according to claim 7 or 8, wherein the any small window is located on an upper layer above its corresponding exit region and blocks its corresponding exit region, a scaling-up hotspot is arranged within a fourth preset distance around the any small window, and the method further comprises:
scaling up the exit region corresponding to the any small window when it is detected that a user triggers the scaling-up hotspot so as to expose at least part of the exit region blocked by the any small window.

10. The method according to any of claims 1 to 9, wherein
the showing the exit region corresponding to the small window under the condition that the small window is displayed in the screen of the terminal, comprises: showing the exit region corresponding to the small window after detecting a long-press instruction of long pressing the small window; the small window is located in the exit region and located on an upper layer above the exit region; and
the executing the exit operation of the small window when the preset operation specific to the exit region is detected, comprises: executing the exit operation of the small window after detecting an operation instruction of dragging the small window out of the exit region.

11. An electronic device (900), comprising:
a processor (920); and
a memory (904), configured to store an instruction executable by the processor (920), wherein
the processor (920) realizes a small window exit method by running the executable instruction, and the method comprises:
showing an exit region corresponding to a small window under the condition that the small window is displayed in a screen of the terminal; and
executing an exit operation of the small window when a preset operation specific to the exit region is detected.

12. The electronic device according to claim 11, wherein the executing the exit operation of the small window when the preset operation specific to the exit region is detected, comprises:
confirming that the preset operation specific to the exit region is detected when the small window is dragged to the exit region so as to execute the exit operation of the small window;
optionally, wherein a first prompt hotspot is arranged within a first preset distance around the exit region, and the method further comprises:
scaling down the small window and/or making the small window semi-transparent when it is detected that the small window is dragged and suspended in the first prompt hotspot;
optionally, wherein a second prompt hotspot is arranged within a second preset distance around the first prompt hotspot, and the method further comprises:
scaling up the exit region and/or changing a color of the exit region when it is detected that the small window is dragged and suspended in the second prompt hotspot;
optionally, wherein the executing the exit operation of the small window, comprises:
performing center scaling on the small window and/or reducing transparency of the small window till to be zero so as to serve as an exit motional picture of the small window after the small window is dragged to the exit region;
optionally, wherein the showing the exit region corresponding to the small window under the condition that the small window is displayed in the screen of the terminal, comprises:
showing the exit region corresponding to the small window under the condition that the small window is displayed in the screen of the terminal and is moved.

13. The electronic device according to claim 11 or 12, wherein small windows shown in the screen are in one-to-one correspondence with exit regions, and the executing the exit operation of the small window when the preset operation specific to the exit region is detected, comprises:
executing the exit operation of any small window when a trigger operation specific to the exit region corresponding to the any small window is detected;
optionally, wherein the any small window is located on an upper layer above its corresponding exit region and blocks its corresponding exit region, a scaling-down hotspot is arranged within a third preset distance around the any small window, and the method further comprises:
scaling down the any small window when it is detected that a user triggers the scaling-down hotspot so as to expose at least part of the exit region blocked by the any small window;
optionally, wherein the any small window is located on an upper layer above its corresponding exit region and blocks its corresponding exit region, a scaling-up hotspot is arranged within a fourth preset distance around the any small window, and the method further comprises:
scaling up the exit region corresponding to the any small window when it is detected that a user triggers the scaling-up hotspot so as to expose at least part of the exit region blocked by the any small window.

14. The electronic device according to any of claims 11 to 13, wherein
the showing the exit region corresponding to the small window under the condition that the small window is displayed in the screen of the terminal, comprises: showing the exit region corresponding to the small window after detecting a long-press instruction of long pressing the small window; the small window is located in the exit region and located on an upper layer above the exit region; and
the executing the exit operation of the small window when the preset operation specific to the exit region is detected, comprises: executing the exit operation of the small window after detecting an operation instruction of dragging the small window out of the exit region.

15. A computer readable storage medium, storing computer instructions thereon, wherein when the instruction is executed by a processor, steps of the method according to any one of claims 1-10 are realized.
